# EUROPÄISCHE PATENTSCHRIFT

(11) **EP 2 593 694 B1**
(45) Veröffentlichungstag und Bekanntmachung des Hinweises auf die Patenterteilung: **23.10.2019**
(21) Anmeldenummer: 11735631.1
(22) Anmeldetag: 13.07.2011
(51) Int. Cl.: F16H 7/08, F16H 7/18

(54) **KETTENTRIEB FÜR VERBRENNUNGSKRAFTMASCHINEN**
CHAIN DRIVE FOR INTERNAL COMBUSTION ENGINES
TRANSMISSION PAR CHAÎNE POUR MOTEURS À COMBUSTION INTERNE

(30) Priorität: 13.07.2010 DE 102010027095
(43) Veröffentlichungstag der Anmeldung: 22.05.2013
(73) Patentinhaber: Promescon GmbH, 72622 Nürtingen (DE)
(72) Erfinder: FLIERL, Rudolf, 92242 Hirschau (DE)
(74) Vertreter: Patentanwälte ter Smitten Eberlein-Van Hoof Rütten Partnerschaftsgesellschaft mbB
(86) Internationale Anmeldenummer: PCT/EP2011/061964
(87) Internationale Veröffentlichungsnummer: WO 2012/007509

(56) Entgegenhaltungen:
- EP-A2- 1 498 638
- DE-A1- 1 550 993
- DE-A1-102006 031 519
- DE-A1-102008 023 663
- JP-A- 2010 084 882
- JP-U- H0 665 655
- TW-B- 520 424
- US-A- 4 963 121
- US-A- 6 086 497

## Beschreibung

Die Erfindung betrifft einen Kettentrieb für Verbrennungskraftmaschinen zum Antrieb von Nockenwellen oder dergleichen, gemäß dem Oberbegriff des Patentanspruchs 1.

Es ist bekannt, dass durch die innere Reibung von Verbrennungskraftmaschinen erhebliche Emissionen und erheblicher Kraftstoffverbrauch verursacht werden. Neben der Kolbenbaugruppe und der Kurbelwelle wird die innere Reibung von Verbrennungskraftmaschinen unter anderem durch den Ventiltrieb und den Steuertrieb, das heißt den Antrieb der Nockenwellen verursacht. Bei vielen Verbrennungskraftmaschinen wird der Steuertrieb durch einen Kettentrieb realisiert, wobei der Kettenspanner einen großen Einfluss auf die Reibung durch die mit einer Feder aufgebrachte Vorspannung ausübt. Aus der DE 198 42 723 A1 ist ein Kettentrieb für Brennkraftmaschinen zum Antrieb von Nockenwellen oder dergleichen von einer Kurbelwelle aus bekannt, wobei am Leertrum und am Lasttrum einer Kette des Kettenantriebes eine Spannschiene bzw. eine Führungsschiene anliegt. Zum Ausgleich von Fertigungstoleranzen sind die Spannschiene und die Führungsschiene auf der einen Seite gelenkig mit einem Bolzen gelagert und auf der anderen Seite dieser Schiene greift eine Stelleinrichtung insbesondere hydraulischer Bauart an. Aus der DE 101 11 658 A1 ist weiterhin ein Kettenspanner bekannt, der bei Relativverschiebungen zwischen Spannschiene und Spannkolben einwandfrei arbeitet, indem der Kettenspanner ein Gehäuse aufweist, das zusammen mit einem darin verschieblich angeordneten Spannkolben einen Druckraum begrenzt, wobei der Spannkolben in einer Aufnahme einen Wälzkörper aufweist und die Aufnahme über eine Verbindungsöffnung mit dem Druckraum verbunden ist. Der Spannkolben ist dabei mit seinen Wälzkörpern gegen eine zur Anlage an die Kette vorgesehene Spannschiene andrückbar, wobei zur hydrostatischen Lagerung des Wälzkörpers in der Aufnahme ein hydrostatisches Druckkissen ausgebildet ist, das über die Verbindungsöffnung an den Druckraum angeschlossen ist. In der DE 10 2007 026 939 A1 wird ein Gleitelement für einen Kettentrieb beschrieben, dessen Herstellungsaufwand und Reibung reduziert sind, indem das Gleitelement eine Gleitoberfläche aufweist, die einer Kette des Kettentriebs zugewandt ist, und die Gleitoberfläche führende Abschnitte zum Führen der Kette auf einer vorgegebenen Kurve und mindestens einen vertieften Abschnitt, der zwischen den führenden Abschnitten angeordnet ist und die Kette nicht berührt, aufweist. Des Weiteren ist aus der DE 40 23 728 A1 ein Kettenspanner für einen Kettentrieb bekannt, der ebenfalls einen unter Vorspannung stehenden, in einem Gehäuse verschieblich angeordneten Kolben aufweist, der in Wirkverbindung mit dem Kettentrieb steht. Durch am Kolben angeordnete Vorelemente sind im Gehäuse zwei mit Öl gefüllte, voneinander getrennte Kammern vorgesehen. Die Formelemente sind hierbei derart ausgebildet, dass Drosselquerschnitte geschaffen sind, die im Ausgangszustand die beiden Kammern derart voneinander trennen, dass in der einen Kammer ein Hochdruck p1 und in der anderen Kammer ein Niedrigdruck p2 vorliegt. Die Hochdruckkammer ist mit einem Öldruckanschluss versehen und des Weiteren ist ein Rücklaufanschluss vorgesehen, der das Öl zum Ölreservoir zurückführt. Darüber hinaus ist aus der DE 10 2008 023 663 A1 ein gattungsgemäßer Kettenbetrieb bekannt.

Alle beschriebenen Kettentriebe weisen jedoch noch stets eine erhöhte Kontaktreibung auf.

Der Erfindung liegt daher die Aufgabe zugrunde, die Reibungsverluste in Kettentrieben als Steuertrieb von Verbrennungskraftmaschinen durch Optimierung von Teilsystemen zu reduzieren und damit den Kraftstoffverbrauch und die CO₂-Emissionen zu reduzieren.

Zur Lösung dieser Aufgabe schlägt die Erfindung einen Kettentrieb als Steuertrieb von verbrennungskraftmaschinen vor, bei dem die Kanäle in Axialrichtung verlaufende Durchbrüche aufweisen. Dieser Aufbau eines Kettentriebs und die Ausbildung eines reibungsarmen Kettenspanners, der die Spannschiene auf die Kette drückt, ermöglichen aufgrund des erhöhten Dämpfungsvermögens die Reduzierung der dynamischen Ausschläge der Kette und durch eine hierdurch ermöglichte Verringerung der Federvorspannkraft im Ausgangszustand eine Reduzierung der im Betrieb auftretenden Reibung. Zur Erreichung einer hohen Dämpfung bei Bewegung des Kettenspanners aufgrund von Kettenschwingungen wird Öl zwischen den Kammern hin- und hergepumpt, wobei die Leitung des Öls von der einen Kammer zur anderen Kammer über die Drosselquerschnitte erfolgt. Durch die Drosselquerschnitte werden bei Turbulenzen hohe Strömungswiderstände erzeugt.

In vorteilhafter Weise sind die Kammern an eine Druckölquelle angeschlossen, die einen ungewollten Ölverlust in den beiden Kammern ausgleicht.

Eine bevorzugte Ausführungsform wird auch darin gesehen, dass das Gehäuse des Kettenspanners vorzugsweise aus Stahl ausgebildet ist und der Kolben vorzugsweise aus Aluminium ausgebildet ist. Mit dieser Wahl von unterschiedlichen Werkstoffen kann aufgrund der unterschiedlichen Temperaturkoeffizienten bei höheren Temperaturen die Dämpfung aufgrund des dann sich enger einstellenden Spaltes (Kolben aus Aluminium, Gehäuse aus Stahl) an die dann höhere Viskosität im Öl angepasst werden. Damit ist die Dämpfung im Kettenspanner auch für Einsatzbereiche bei sehr unterschiedlichen Temperaturen einsetzbar.

Des Weiteren ist in vorteilhafter Weise vorgesehen, dass die Mittel zur Reduzierung ferner durch einen Segmentierungsbereich der Spannschiene ausgebildet sind, derart, dass eine möglichst geringe Kontaktfläche zwischen der Kette und der Spannschiene realisierbar ist. Insbesondere kann der Segmentierungsbereich Aussparungen aufweisen, die einerseits eine hohe Materialeinsparung gewährleisten und andererseits den Kontaktbereich vermindern. Um ein Minimum an herkömmlicher Schmierung zu gewährleisten, kann eine Schmiertasche vorgesehen sein. Auch können seitlich verlaufende Seitenwandelemente vorgesehen sein, die in vorteilhafter Weise zurückspringende Wandstücke aufweisen, um auch hier den Kontaktbereich soweit wie möglich zu verringern. Auch können in dem Seitenwandelement Aussparungen vorgesehen sein.

Vorteilhaft ist weiterhin vorgesehen, dass die Spannschiene als einstückiges Formteil ausgebildet ist, wobei eine der Kette zugewandte Kontaktfläche der Spannschiene im Umlenkbereich der Spannschiene gewölbt ausgebildet ist. Eine bevorzugte Ausführungsform zur weiteren Verminderung der Reibung wird darin gesehen, dass die Spannschiene in einem oberen und unteren Anschlagbereich der Kette abgerundet ausgebildet ist, wobei die Anschlagbereiche durch Schmiertaschen unterbrochen sind und wobei für die Kette nahe den Nockenwellenkettenrädern zusätzliche Ausschlagbereiche vorgesehen sind.

Eine vorteilhafte Weiterbildung wird auch darin gesehen, dass die Führungsschienen im Wesentlichen gradlinig verlaufend ausgebildet sind, wobei deren axiale Anlaufschultern insbesondere kleine Abmessungen aufweisen, um die Reibung gering zu halten.

Eine weitere, ebenfalls vorteilhafte Ausführung wird darin gesehen, dass die Kette ohne Umlenkung im Zugtrum im gespannten Zustand einen Abstand zu den Führungsschienen aufweist, wobei die Führungsschienen als Anschlagbegrenzung im Eigen- oder Schwingungszustand vorgesehen sind, und dass die Kette bei Umlenkung im Zugtrum nur in einem begrenzten Bereich an den Führungsschienen, vorzugsweise in der Nähe der Nockenwellenkettenräder, zur Erreichung einer größeren Umschlingung anliegt, wobei die Kette in anderen Bereichen, vorzugsweise dem mittleren Bereich des Zugtrums, einen definierten Abstand aufweist.

Mit dem erfindungsgemäß ausgebildeten reibungsarmen Kettentrieb als Steuertrieb für Verbrennungskraftmaschinen wird eine Reduzierung der Reibungsverluste durch die Optimierung von einzelnen Bauteilen gewährleistet. So erfolgt beim erfindungsgemäßen Kettenspanner im Gegensatz zu bekannten Kettenspannern durch Reduktion der Federvorspannung bei gleichzeitiger Erhöhung des Dämpfungsvermögens eine Reduzierung der Reibung der Kette an den Spann- bzw. Führungsschienen. Weitere Möglichkeiten einer Reduzierung der Reibungsverluste sind durch die geringen Kontaktbereiche zwischen den Spann- und Führungsschienen und der Kette im größten Betriebsbereich gegeben und durch die Anordnung von Aussparungen bzw. Schmiertaschen in den Kontaktflächen und den Umlenkbereichen. Weiterhin wird es als vorteilhaft angesehen, dass beide Maßnahmen, wie der reibungsarme Kettenspanner sowie die Führungs- und Spannschienen mit reduzierten Kontaktbereichen zur Kette, in Kombination eingesetzt werden, da sich dadurch Synergieeffekte in der Reibungsreduktion ergeben, die größer als die aufsummierten einzelnen Vorteile der beiden Maßnahmen sind.

Die Erfindung wird nachfolgend anhand eines schematisch in der Zeichnung dargestellten Ausführungsbeispieles näher erläutert. Hierbei zeigen:
- Figur 1: eine erfindungsgemäße Ausführungsform eines Kettentriebes;
- Figur 2: eine Ausführungsform eines Kettenspanners;
- Figur 3: eine erste Ausführungsform einer Spannschiene; und
- Figur 4: eine zweite Ausführungsform einer Spannschiene.

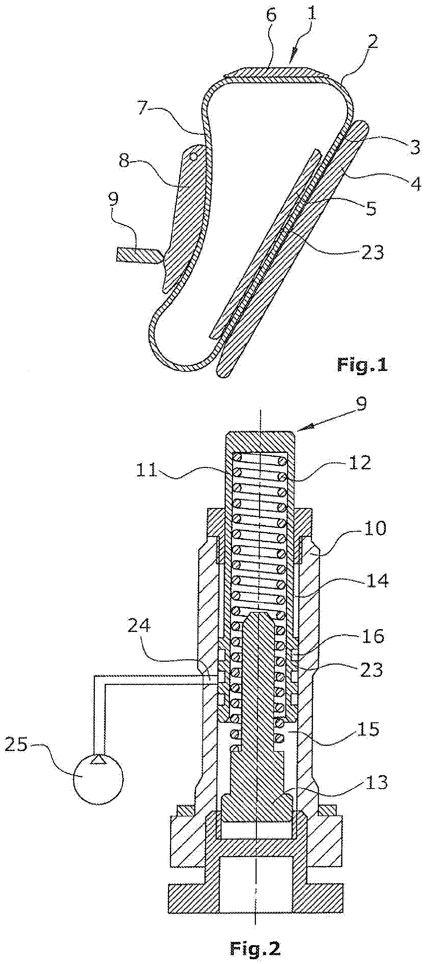

Figur 1 zeigt das Prinzip eines erfindungsgemäßen Kettentriebes 1 als Steuertrieb einer Verbrennungskraftmaschine. Eine Kette 2 wird in einem Zugtrum durch die Führungsschienen 4, 5, 6 mit einem geringen Kontaktbereich zwischen den nicht näher dargestellten bekannten Nockenwellenkettenrädern bzw. den Phasenstellern geführt. Im Leertrum 7 wird die Kette 2 mittels einer Spannschiene 8 gekoppelt mit einem Kettenspanner 9 gespannt.

Figur 2 zeigt den erfindungsgemäßen reibungsarmen Kettenspanner 9 im Detail. In einem vorzugsweise aus Stahl ausgebildeten Gehäuse 10 des Kettenspanners 9 ist ein vorzugsweise aus Aluminium ausgebildeter Kolben 11 vorgesehen. Durch diese Wahl von unterschiedlichen Werkstoffen kann aufgrund der unterschiedlichen Temperaturkoeffizienten bei höheren Temperaturen die Dämpfung aufgrund des dann sich enger einstellenden Spaltes an die dann geringere Viskosität im Öl angepasst werden. So ändert sich bei einem Durchmesser eines Kolbens von ca. 20 mm der Spalt bei einer Temperaturänderung von ca. 60°C um 0,0156 mm. Damit ist die Dämpfung im Kettenspanner 9 auch für Temperaturunterschiede im Öl entsprechend anpassbar.

In einem endseitigen Bereich des Kettenspanners 9 ist ein Führungselement 13 angeordnet, welches eine Feder 12 aufnimmt und führt. Der Kolben 11 ist durch die Feder 12 unter Vorspannung gehalten und drückt gegen die in Figur 1 dargestellte Spannschiene 8, insbesondere in deren unteren Bereich. Da der Kettenspanner 9 einen großen Einfluss auf die Reibung der Kette 2 durch die mit einer Feder 12 aufgebrachte Vorspannung aufweist, erfolgt im Gegensatz zu bekannten Kettenspannern mit dem erfindungsgemäßen Kettenspanner 9 durch die Reduktion der Vorspannung der Feder 12 eine Reduzierung der Reibung der Kette 2 im Betrieb. Dies geht einher mit einer gleichzeitigen Erhöhung des Dämpfungsvermögens. Erhöhte Rückstellkräfte treten nur dann in Folge von Schwingungen der Kette 2 durch die hohe Dämpfung des Kettenspanners 9 auf. In dem Drehzahlbereich, in dem keine Schwingungen der Kette 2 auftreten, wirkt dann eine geringe Vorspannkraft der Feder 12 auf die Kette 2, wodurch die Reibung reduziert wird. Die hohe Dämpfung bei Schwingungen der Kette 2 wird dadurch erreicht, dass Öl zwischen zwei getrennt ausgebildete Kammern 14, 15 hin und her gepumpt wird. Die Trennung der Kammern 14, 15 erfolgt durch Formelemente 23, die im vorliegenden Ausführungsbeispiel Kanäle 16 bilden, die als Drosselquerschnitte wirken. Beim Pumpen des Öls von der einen zur anderen Kammer 14, 15 wird das Öl über die Kanäle 16 geleitet, wodurch hohe Turbulenzen hohe Strömungswiderstände erzeugen und somit hohe Druckverluste entstehen. Die Kanäle 16 können hierbei eine schraubenförmige Nut oder radial umlaufende Nuten bilden, die darüber hinaus auch noch längsgerichtete Durchbrüche aufweisen können. Das Gehäuse kann eine Öffnung 24 aufweisen, das mit einer Öldruckquelle 25 verbunden ist, derart, dass nicht gewollte Leckverluste im Gehäuse 10 ausgeglichen werden können. Es können auch mehrere Einlassöffnungen, beispielsweise eine direkt im Bereich der Kammer 14 und eine direkt im Bereich der Kammer 15, vorgesehen sein. Diese Ausführungsform des Kettenspanners 9 bietet grundsätzlich den Vorteil, dass kein ständig zirkulierender Ölkreislauf vorgesehen werden muss.

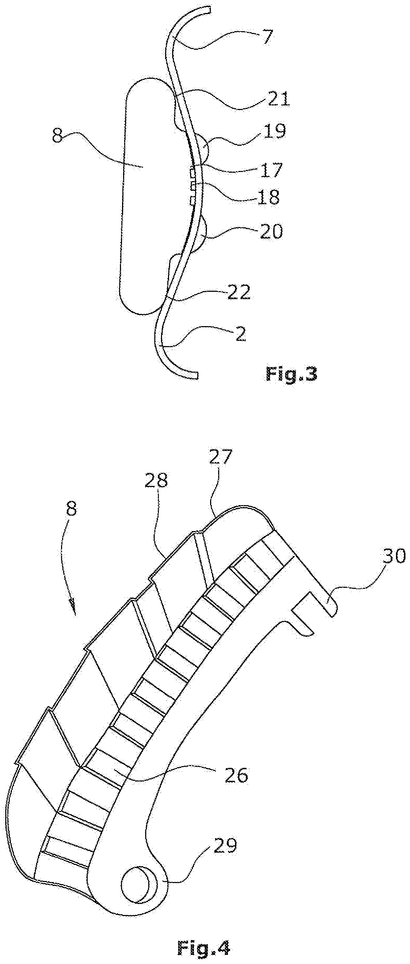

Figur 3 zeigt die erfindungsgemäß als Formelement ausgebildete Spannschiene 8, die in einer der Kette 2 zugewandten Kontaktfläche gewölbt ausgebildet ist. Die Spannschiene 8 wird dabei durch den reibungsarmen Kettenspanner 9 auf die Kette 2 gedrückt, um die dynamischen Ausschläge der Kette 2 zu reduzieren. Zur Reduzierung der Reibung zwischen der Spannschiene 8 und der anliegenden Kette 2 weist die Spannschiene 8 vorzugsweise mittig einen Segmentierungsbereich 17 auf, der durch Schmiertaschen 18 unterbrochen wird. Der Segmentierungsbereich 17 weist jeweils endseitig Anlaufstege 19, 20 zur sicheren axialen Führung der Kette 2 auf. Die Kette 2 ist dabei zur Minimierung des Kontaktbereiches zwischen der Kette 2 und der Spannschiene 8 nur an den Anlaufstegen 19, 20 axial geführt und weist an den Segmenten des Segmentierungsbereiches 17 einen definierten Abstand auf. Die Spannschiene 8 ist in einem oberen und unteren Anschlagbereich 21, 22 der Kette 2 abgerundet ausgebildet, wobei die Anschlagbereiche 21, 22 ebenfalls durch Schmiertaschen unterbrochen sind. Die Führungsschienen 4, 5, 6 entsprechend Figur 1 sind so gestaltet, dass ihre Kontaktbereiche mit der Kette 2 im größten Betriebsbereich möglichst klein gehalten sind oder, wenn möglich, vermieden werden, um die Reibung gering zu halten. Auch die einander gegenüberliegenden axialen Anlaufschultern der Führungsschienen 4, 5, 6 sind deshalb möglichst klein ausgebildet, wobei die Führungsschienen 4, 5, 6 als Formteile Im Wesentlichen gradlinig verlaufend ausgebildet sind.

Bei Anordnung der Kette 2 ohne Umlenkung im Zugtrum 3 weisen die Führungsschienen 4, 5 im gespannten Zustand der Kette 2 zur Vermeidung der Reibung einen Abstand zur gespannten Kette 2 auf. Die Führungsschienen 4, 5 wirken dabei als Anschlagbegrenzung im Eigen- bzw. Schwingungszustand. Erfolgt im Zugtrum 3 eine Umlenkung der Kette 2, so liegt die Kette 2 nur in einem begrenzten Bereich an den Führungsschienen 4, 5 an, vorzugsweise in der Nähe der Nockenwellenkettenräder zur Erreichung einer größten Umschlingung und weist in den übrigen Schienenbereichen, vorzugsweise im mittleren Bereich des Zugtrums 3 einen definierten Abstand auf.

Figur 4 zeigt eine zweite Ausführungsform der als Formelement ausgebildeten Spannschiene 8. Diese zweite Ausführungsform einer Spannschiene 8 zeichnet sich durch eine besonders leichte materialarme Ausführungsform aus. Zum Einen sind durchgehende Aussparungen 26 vorgesehen, die die mögliche Kontaktfläche mit der Kette 2 minimieren und dementsprechend auch die Reibung minimieren. Des Weiteren ist ein Seitenwandelement 27 vorgesehen, das zurück springende Wandstücke 28 aufweist, die zur Reduzierung der Kontaktreibung beitragen. Es können natürlich auch beidseitig Seitenwandelemente vorgesehen sein. Die zu wählende Breite B der Aussparungen 26 ist sinnvoller Weise von der Teilung der gewählten Kette 2 abhängig zu machen. So ist vorzugsweise eine Breite B = 0,5 x t - 1,0 mm vorzusehen. t bezeichnet hier den Abstand der zwei Drehpunkte eines Kettengliedes. Des Weiteren ist an einem Ende ein Bolzenauge 29 für die Spannschienenbefestigung vorgesehen. Am entgegengesetzten Ende ist eine Aufnahme 30 für den Kolben 11 des Kettenspanners 9 vorgesehen.

Die Erfindung beschränkt sich nicht auf die gezeigten Ausführungsbeispiele, sondern Ist in der Gestaltung und Anordnung der Führungs- und Spannschiene sowie der Ausbildung der Einzelelemente des Kettenspanners variabel. Sie umfasst insbesondere auch Varianten, die durch Kombination von in Verbindung mit der vorliegenden Erfindung beschriebenen Merkmalen bzw. Elementen gebildet werden können. Alle in der vorstehenden Beschreibung erwähnten sowie aus den Zeichnungen entnehmbaren Merkmale sind des Weiteren Bestandteil der Erfindung, auch wenn sie nicht besonders hervorgehoben und in den Ansprüchen erwähnt sind.

### Bezugszeichenliste

- 1: Kettentrieb
- 2: Kette
- 3: Zugtrum
- 4: Führungsschiene
- 5: Führungsschiene
- 6: Führungsschiene
- 7: Leertrum
- 8: Spannschiene
- 9: Kettenspanner
- 10: Gehäuse
- 11: Kolben
- 12: Feder
- 13: Führungselement
- 14: Kammer
- 15: Kammer
- 16: Kanal
- 17: Segmentierungsbereich
- 18: Schmiertasche
- 19: Anlaufsteg
- 20: Anlaufsteg
- 21: Anschlagbereich
- 22: Anschlagbereich
- 23: Formelemente
- 24: Öffnung
- 25: Druckölquelle
- 26: Aussparungen
- 27: Seitenwandelement
- 28: Wandstücke
- 29: Bolzenauge
- 30: Aufnahme

## Patentansprüche

1. Kettentrieb für Verbrennungskraftmaschinen zum Antrieb von Nockenwellen, mit einer Kette (2), Führungsschienen (4, 5, 6) und mindestens einer Spannschiene (8) sowie einem Kettenspanner (9), der derart mit der Spannschiene (8) in Wirkverbindung steht, dass die Kette (2) in einem Leertrum (7) gespannt ist, wobei der Kettenspanner (9) einen in einem Gehäuse (10) verschieblich gelagerten Kolben (11) aufweist, der durch eine Feder (12) unter Vorspannung gehalten ist, wobei zwei in axialer Richtung des Gehäuses (10) aufeinander folgende, mit Öl gefüllte, durch am Kolben (11) und/oder am Gehäuse (10) angeordnete Formelemente (23) voneinander getrennte Kammern (14, 15) vorgesehen sind, wobei die Formelemente (23) schraubenförmig oder radial umlaufende Kanäle (16) als Drosselquerschnitte am Kolben (11) oder am Gehäuse (10) ausbilden, und wobei Mittel zur Reduzierung der Reibung zwischen der Kette (2) und den Führungs- und Spannschienen (4, 5, 6, 8) vorgesehen sind, wobei die Mittel zur Reduzierung der Reibung dadurch ausgebildet sind, dass das Gehäuse (10) nahezu fluiddicht abgeschlossen ist, so dass bei Bewegung des Kolbens (11) aufgrund von Kettenschwingungen Öl von der einen zur anderen Kammer (14, 15) leitbar ist, derart, dass in jedem Betriebszustand eine höhere Dämpfung erreichbar ist, wodurch eine im Ausgangszustand des Kettenspanners (9) reduzierte Vorspannung einstellbar ist, **dadurch gekennzeichnet, dass** die Kanäle (16) in Axialrichtung verlaufende Durchbrüche aufweisen.

2. Kettentrieb nach Anspruch 1, **dadurch gekennzeichnet, dass** die Kammern an eine Druckölquelle (25) angeschlossen sind, die einen ungewollten Ölverlust in den beiden Kammern (14, 15) ausgleicht.

3. Kettentrieb nach einem der vorherigen Ansprüche, **dadurch gekennzeichnet, dass** das Gehäuse (10) des Kettenspanners (9) vorzugsweise aus Stahl ausgebildet ist und der Kolben (11) vorzugsweise aus Aluminium ausgebildet ist.

4. Kettentrieb nach einem der vorherigen Ansprüche, **dadurch gekennzeichnet, dass** die Mittel zur Reduzierung der Reibung ferner durch einen Segmentierungsbereich (17) der Spannschiene (8) ausgebildet sind, derart, dass eine möglichst geringe Kontaktfläche zwischen der Kette (2) und der Spannschiene (8) realisierbar ist.

5. Kettentrieb nach Anspruch 4, **dadurch gekennzeichnet, dass** die der Segmentierungsbereich (17) Aussparungen (26) aufweist.

6. Kettentrieb nach Anspruch 4 oder 5, **dadurch gekennzeichnet, dass** mindestens eine Schmiertasche (18) vorgesehen ist.

7. Kettentrieb nach einem der Ansprüche 4 bis 6, **dadurch gekennzeichnet, dass** mindestens ein seitlich verlaufendes Seitenwandelement (27) vorgesehen ist.

8. Kettentrieb nach Anspruch 7, **dadurch gekennzeichnet, dass** das Seitenwandelement (27) zurückspringende Wandstücke (28) aufweist.

9. Kettentrieb nach Anspruch 7 oder 8, **dadurch gekennzeichnet, dass** in dem Seitenwandelement (27) Aussparungen vorgesehen sind.

10. Kettentrieb nach einem der Ansprüche 4 bis 9, **dadurch gekennzeichnet, dass** die Spannschiene (8) als einstückiges Formteil ausgebildet ist, wobei eine der Kette (2) zugewandte Kontaktfläche der Spannschiene (8) gewölbt ausgebildet ist.

11. Kettentrieb nach Anspruch einem der Ansprüche 4 oder 10, **dadurch gekennzeichnet, dass** die Spannschiene (8) in einem oberen und unteren Anschlagbereich (21, 22) der Kette (2) abgerundet ausgebildet ist, wobei die Anschlagbereiche (21, 22) durch mindestens eine Schmiertasche (18) unterbrochen sind, und wobei für die Kette (2) nahe den Nockenwellenkettenrädern zusätzliche Ausschlagbereiche vorgesehen sind.

12. Kettentrieb nach einem der vorherigen Ansprüche, **dadurch gekennzeichnet, dass** die Führungsschienen (4, 5, 6) im Wesentlichen gradlinig verlaufend ausgebildet sind, wobei deren axiale Anlaufschultern insbesondere kleine Abmessungen aufweisen.

13. Kettentrieb nach einem der vorherigen Ansprüche, **dadurch gekennzeichnet, dass** die Kette (2) ohne Umlenkung im Zugtrum (3) im gespannten Zustand einen Abstand zu den Führungsschienen (4, 5) aufweist, wobei die Führungsschienen (4, 5) als Anschlagbegrenzung im Eigen- oder Schwingungszustand vorgesehen sind.

14. Kettentrieb nach Anspruch einem der vorherigen Ansprüche, **dadurch gekennzeichnet, dass** die Kette (2) bei Umlenkung im Zugtrum (3) nur in einem begrenzten Bereich an den Führungsschienen (4, 5, 6) vorzugsweise in der Nähe der Nockenwellenkettenräder zur Erreichung einer größeren Umschlingung anliegt, wobei die Kette (2) in anderen Bereichen, vorzugsweise dem mittleren Bereich des Zugtrums (3), einen definierten Abstand aufweist.

## Claims

1. Chain drive for internal combustion engines for driving camshafts, comprising a chain (2), guide rails (4, 5, 6) and at least one tensioning rail (8) as well as a chain tensioner (9) operatively connected with the tensioning rail (8) such that the chain (2) is stretched in an empty strand (7), wherein the chain tensioner (9) comprises a piston (11) slidably mounted in a housing (10) which piston is maintained pre-tensioned by a spring (12), wherein two oil-filled chambers (14, 15) are provided which are successive in the axial direction of the housing (10) and separated by mold elements (23) arranged on the piston (11) and/ or on the housing (10) arranged mold elements (23) are provided, wherein the mold elements (23) form helical or radially extending channels (16) as throttle cross sections (16) at the piston (11) or the housing (10), and wherein means for reducing the friction between the chain (2) and the guide and tensioning rails (4, 5, 6, 8) are provided, wherein the means for reducing the friction between the chain (2) and the guide and tensioning rails (4, 5, 6, 8) are formed by the housing (10) being closed almost fluid-tight, so that upon movement of the piston (11) due to chain vibrations oil can be passed from one chamber (14, 15) to the other such that in each operating state, a higher damping is achievable, whereby a bias is adjustable that is reduced in the initial state of the chain tensioner (9), **characterized in that** the channels (16) have openings extending in the axial direction.

2. Chain drive according to claim 1, **characterized in that** the chambers are connected to a pressure oil source (25) which compensates for an unwanted loss of oil in the two chambers (14, 15).

3. Chain drive according to of one of the preceding claims, **characterized in that** the housing (10) of the chain tensioner(9) is preferably made of steel and the piston (11) is preferably made of aluminum.

4. Chain drive according to one of the preceding claims, **characterized in that** the means for reducing the friction are further formed by a segmentation region (17) of the tensioning rail (8) such that the smallest possible contact surface between the chain (2) and the tensioning rail (8) can be obtained.

5. Chain drive according to claim 4, **characterized in that** the segmentation region (17) has recesses (26).

6. Chain drive according to claim 4 or 5, **characterized in that** at least one lubrication pocket (18) is provided.

7. Chain drive according to one of claims 4 to 6, **characterized in that** at least one laterally extending side wall element (27) is provided.

8. Chain drive according to claim 7, **characterized in that** the side wall element (27) has recessed wall parts (28).

9. Chain drive according to claim 7 or 8, **characterized in that** in the side wall element (27) is provided with recesses.

10. Chain drive according to one of claims 4 to 9, **characterized in that** the tensioning rail (8) is formed as a one-piece molded part, wherein a contact surface of the tensioning rail (8) facing the chain (2) is arched.

11. Chain drive according to claim 4 or 10, **characterized in that** the tensioning rail (8) is rounded in an upper and lower abutment region (21, 22) of the chain (2), wherein the abutment regions (21, 22) are interrupted by at least one lubrication pocket (18), and wherein additional deflection regions are provided for the chain (2) near the camshaft sprockets.

12. Chain drive according to one of the preceding claims, **characterized in that** the guide rails (4, 5, 6) are designed to extend substantially straight, wherein the axial thrust shoulders have in particular small dimensions.

13. Chain drive according to one of the preceding claims, **characterized in that** the chain (2), without deflection in the loaded strand (3), is at a distance from the guide rails (4, 5) in the tensioned state, wherein the guide rails (4, 5) are provided as a limit stop in the own or vibration state.

14. Chain drive according to claim one of the preceding claims, **characterized in that** the chain (2), with deflection in the loaded strand (3), rests on the guide rails (4, 5, 6) only in a limited area, preferably in the vicinity of the camshaft sprockets, to achieve a larger loop, wherein in other areas, preferably the central region of the loaded strand (3), the chain (2) has a defined distance.

## Revendications

1. Transmission par chaîne pour moteurs à combustion interne pour l'entraînement des arbres à cames, comprenant une chaîne (2), des rails de guidage (4, 5, 6) et au moins un rail de tension (8) ainsi qu'un tendeur de chaîne (9) en liaison fonctionnelle avec le rail de tension (8) de sorte que la chaîne (2) soit tendue dans un brin de retour (7), le tendeurde chaîne (9) comprenant un piston (11) monté coulissant (11) dans un carter (10), le piston étant maintenu en état précontraintpar un ressort (12), dans laquelle deux chambres (14, 15), successives dans la direction axiale du carter (10) et remplies d'huile, sont séparées par des éléments formés disposés sur le piston (11) et/ou sur le carter (10), sont prévues, lesdits éléments formés (23) formant des canaux (16) s'étendant de manière hélicoïdale ou radiale comme sections d'étranglement sur le piston (11) ou sur le carter (10), et dans laquelle des moyens sont prévus pour réduire le frottement entre la chaîne (2) et les rails de guidage et de tension (4, 5, 6, 8), les moyens pour réduire le frottement étant formés par le carter (10) étant fermé de manière presque étanche aux fluides, de sorte que lors du mouvement du piston (11) á cause de vibrations de la chaîne, l'huile peut être passé de l'une chambre à l'autre (14, 15) de sorte que, dans chaque état de fonctionnement, il est possible d'obtenir un amortissement plus élevé, ce qui permet de régler une précontrainte réduite dans l'état initial du tendeur de chaîne (9), **caractérisée en ce que** les canaux (16) ont des ouvertures s'étendant dans la direction axiale.

2. Transmission par chaîne selon la revendication 1, **caractérisée en ce que** les chambres sont raccordées à une source d'huile sous pression (25) qui compense une perte d'huile indésirable dans les deux chambres (14, 15).

3. Transmission par chaîne selon la revendication 1 ou 2, **caractérisée en ce que** le carter (10) du tendeur de chaîne (9) est de préférence fabriqué en acier et que le piston (11) est de préférence fabriqué en aluminium.

4. Transmission par chaîne selon l'une des revendications précédentes, **caractérisée en ce que** les moyens pour réduire le frottement sont en outre formés par une région de segmentation (17) du rail de tension (8), de sorte que la plus petite surface de contact possible entre la chaîne (2) et le rail de tension (8) peut être réalisée.

5. Transmission à chaîne selon la revendication 4, **caractérisé en ce que** la région de segmentation (17) a des évidements (26).

6. Transmission par chaîne selon la revendication 4 ou 5, **caractérisée en ce qu'**au moins une poche de lubrification (18) est prévue.

7. Transmission par chaîne selon l'une des revendications 4 à 6, **caractérisée en ce qu'**au moins un élément de paroi latérale (27) est prévu qui s'étend latéralement.

8. Transmission par chaîne selon la revendication 7, **caractérisée en ce que** l'élément de paroi latérale (27) a des pièces de paroi (28) rétrécies.

9. Transmission à chaîne selon la revendication 7 ou 8, **caractérisée en ce que** des évidements sont prévus dans ledit élément de paroi latérale (27).

10. Transmission par chaîne selon l'une des revendications 4 à 9, **caractérisée en ce que** le rail de tension (8) est formé comme pièce moulée intégrale, l'une des surfaces de contact vis-à-vis de la chaîne (2) du rail detension (8) étant arquée.

11. Transmission par chaîne selon la revendication 4 ou 10, **caractérisée en ce que** le rail de tension (8) est arrondi dans une zone d'arrêt supérieure et inférieure (21, 22) de la chaîne (2), les zones d'arrêt (21, 22) étant interrompues par au moins une poche de lubrification (18) et des zones de déviation supplémentaires étant prévues pour la chaîne (2) à proximité des pignons de l'arbre à cames.

12. Transmission par chaîne selon l'une des revendications précédentes, **caractérisée en ce que** les rails de guidage (4, 5, 6) sont formés pour s'étendre sensiblement en ligne droite, les épaulements d'appui axiaux ayant, en particulier, de petites dimensions.

13. Transmission par chaîne selon l'une des revendications précédentes, **caractérisée en ce qu'**en état tendu, la chaîne (2), sans déviation en brin de traction (3), est à distance des rails de guidage (4, 5), les rails de guidage (4, 5) sont prévus comme limite de butée dans l'état naturel ou de vibration.

14. Transmission par chaîne selon l'une quelconque des revendications précédentes, **caractérisée en ce que** la chaîne (2), lorsqu'elle est déviée dans le brin de traction (3) s'appuie sur les rails de guidage (4, 5, 6) uniquement dans une zone limitée, de préférence au voisinage des pignons de l'arbre à cames pour obtenir une boucle plus grande, la chaîne (2) présentant une distance définie dans d'autres zones, de préférence la région centrale de la traction (3).
